# EUROPÄISCHE PATENTSCHRIFT

(11) **EP 0 754 695 B1**
(45) Veröffentlichungstag und Bekanntmachung des Hinweises auf die Patenterteilung: **07.11.2001**
(21) Anmeldenummer: 96111358.6
(22) Anmeldetag: 15.07.1996
(51) Int. Cl.: C07F 9/50

(54) **Chirale tertiäre Phosphane und Verfahren zu ihrer Herstellung**
Chiral tertiary phosphanes and process for their preparation
Phosphates tertiaires chiraux et procédé pour leur préparation

(30) Priorität: 20.07.1995 DE 19526464
(43) Veröffentlichungstag der Anmeldung: 22.01.1997
(73) Patentinhaber: Celanese Chemicals Europe GmbH, 60439 Frankfurt am Main (DE)
(72) Erfinder: Millauer, Hans, Dr., 65760 Eschborn (DE); Brungs, Peter, Dr., 65929 Frankfurt (DE)

(56) Entgegenhaltungen:
- EP-A- 0 684 248
- US-A- 5 288 912
- J. ORGANOMET. CHEM. (JORCAI,0022328X);95; VOL.495 (1-2); PP.103-11, DEPARTAMENT DE QUIMICA INORGANICA, UNIVERSITAT DE BARCELONA, DIAGONAL 647;BARCELONA; 08028; SPAIN (ES), XP002016046 MULLER G ET AL: "Synthesis of monohydroxy -methyl- and -ethyl-phosphines PPh2CHROH"

## Beschreibung

Die Erfindung betrifft chirale tertiäre Diaryl-alkylphosphine (I) und deren Herstellung durch nukleophile Substitution von chiralen quartären Ammoniumverbindungen (II) durch Salze von Diarylphosphin-Anionen (III).

Die Komplexe verschiedener Schwermetallatome mit optisch aktiven, tertiären Phosphinen als Liganden finden als Katalysatoren bei verschiedensten asymmetrischen Synthesen Verwendung (Brunner, Zettlmeier, Handbook of Enatioselective Catalysis Vol. I + II, VCH Verlagsgesellschaft mbH, Weinheim).

Im Hinblick auf die Vielfalt der Einsatzmöglichen derartiger Katalysatoren besteht ein Bedarf an neuen chiralen Phosphinliganden um einerseits das Spektrum ihrer Anwendungsmöglichkeiten zu ergänzen und zu erweitern und andererseits bestimmte Reaktionen besonders günstig durchführen zu können.

Diese Aufgabe wird gelöst durch chirale tertiäre Diaryl-alkylphosphine der allgemeinen Formel (I), 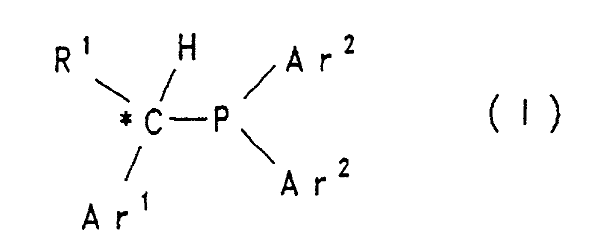 worin bedeuten:
- R¹: (C₁-C₄)Alkyl, das auch mit F, CF₃, OCH₃ substituiert sein kann,
- Ar¹, Ar²: Phenyl, Naphthyl, Anthracenyl, die auch einen oder mehrere Substituenten aus der Reihe (C₁-C₄)Alkyl, (C₁-C₄)Alkoxy, CF₃, F tragen können,
- *: bezeichnet das chirale Kohlenstoffatom, das sowohl (R) als auch (S) konfiguriert sein kann.

Von Interesse sind hierbei die Verbindungen wobei Ar¹, Ar² für Phenyl oder Naphthyl stehen, die einen oder zwei Substituenten aus der Reihe CF₃, F, OCH₃, CH₃ tragen, und R¹ einen unsubstituierten (C₁-C₄)Alkylrest darstellt.

Wichtig sind natürlich auch die Verbindungen worin Ar¹ und Ar² unsubstituiertes Phenyl oder Naphthyl darstellen, und R¹ einer CH₃-Gruppe entspricht.

Prinzipiell lassen sich tertiäre Diaryl-alkylphosphine nach zwei verschiedenen Methoden herstellen. Die am häufigsten angewendete Methode ist die Umsetzung einer geeigneten metallorganischen Verbindung wie etwa einer Grignardverbindung mit Diarylchlorphosphinen ("Methoden der organischen Chemie", Houben-Weyl, 4. Aufl., [1963], Bd. XII/1, S. 32ff).

Nachteilig bei dieser Methode ist, daß die entsprechenden metallorganischen Verbindungen fallweise nicht oder nur schwierig zugänglich sind, insbesondere dann, wenn noch bestimmte Substituenten, wie Keto- oder Estergruppen vorhanden sind. Auch sind oftmals unerwünschte Kupplungs- oder Ringschlußreaktionen anstelle der beabsichtigten C-P-Bindungsknüpfung beobachtet worden.

Eine zweite, bekannte Methode besteht darin, das Metallsalz eines Diarylphosphin-Anions zu erzeugen und mit einem Alkylhalogenid umzusetzen. Dieses Verfahren ist jedoch nicht allgemein anwendbar und liefert nur mit reinen Alkylresten oder bei bestimmten substituierten Alkylresten befriedigende bis gute Ausbeuten, bei araliphatischen Resten werden jedoch nur mäßige bis schlechte Ausbeuten (30 % bzw. 44 % bei Benzylchlorid) erzielt, wie der europäischen Patentschrift EP 0 268 526 zu entnehmen ist.
Nach T.W. Bentley et al. (J. Chem. Soc., Perkin Trans. 2 (1994), 2531-8) reagieren benzylische Halogenide zudem vorwiegend unter S_{N}1-Bedingungen, d.h. über die Bildung von Carbokationen. Die Synthese enantiomerenreiner Phosphine ausgehend von in α-Position chiralen Benzylhalogeniden ist daher nicht möglich.

In noch stärkerem Maße treffen diese Nachteile auf reaktivere Abgangsgruppen wie beispielsweise Tosylate oder Mesylate zu, die sich bei einigen Aralkylderivaten schon bei Raumtemperatur zersetzen (T.W. Bentley et al., J. Chem. Soc., Perkin Trans. 2 (1994), 2531-8).

Muller et al (J. Organomet. Chem., **495**, (1995), 103ff.) beschreiben die Herstellung der mit den Zielverbindungen verwandten, in Benzylstellung durch eine Hydroxymethyl-Gruppe substituierten Verbindung (Ar¹,A²= Ph; R¹ = -CH₂-OH) durch Umsetzung des chiralen S(+)-Styrolepoxids mit Lithiumdiphenylphosphid.
Hierbei entsteht neben dem gewünschten Produkt durch den nukleophilen Angriff des Phosphids am anderen im Dreiring einbezogenen Kohlenstoff-Atom im Verhältnis 7:3 ein Regioisomeres, daß sich nur unter Schwierigkeiten abtrennen läßt. Das Verfahren ist auf die Herstellung von β-Hydroxy-substituierten Phosphanen beschränkt und ist aufgrund der mäßigen Ausbeuten (Produktgemische) nur sehr schwierig in der Technik umzusetzen.

Es bestand also Bedarf nach einem Verfahren, das die beschriebenen Nachteile vermeidet und es erlaubt die erfindungsgemäßen Verbindungen in hoher Ausbeute und Reinheit herzustellen.

Die Herstellung von aralkylsubstituierten Diarylphosphinen durch die Umsetzung von Diarylphosphin-Anionen mit quartären aralkylsubstituierten Ammoniumverbindungen ist in der deutschen Patentanmeldung DE 44 18 346 beschrieben worden.

Bislang wurden mit diesen Methoden jedoch nur achirale tertiäre Phosphine erzeugt. Die Synthese chiraler Diaryl-aralkylphosphine (I), die als optisch aktive Katalysator-Liganden bei enantioselektiven Synthesen Einsatz finden können, ist auf diese Weise bislang noch nicht beschrieben.

Überraschenderweise wurde nun gefunden, daß die Umsetzung von chiralen benzylischen quartären Ammoniumverbindungen mit Salzen eines Diarylphosphin-Anions ohne Racemisierung verläuft, d.h. die entsprechenden tertiären Phosphane in enantiomerenreiner Form erhalten werden.

Die Erfindung betrifft also ferner ein Verfahren zur Herstellung chiraler Diarylaralkylphosphine der Formel (I), dadurch gekennzeichnet, daß chirale quartäre Ammoniumsalze der Formel (II) 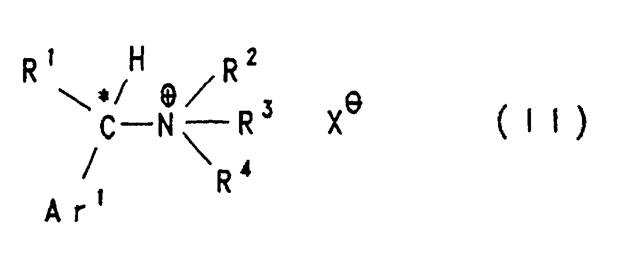 worin Ar¹ und R¹ die angegebene Bedeutung besitzen, R², R³ und R⁴ gleiche oder verschiedene, geradkettige oder verzweigte (C₁-C₂₀)Alkylreste darstellen und X⁻ ein Anion einer organischen oder anorganischen Säure bedeutet mit einem Salz eines Diarylphosphins der Formel (III), 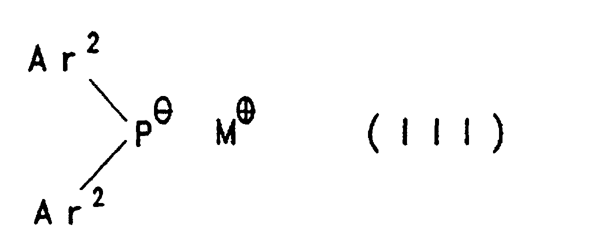 worin Ar² die vorstehend genannte Bedeutung besitzt und M⁺ ein Metallkation bedeutet,
umgesetzt werden.

Von großer Bedeutung ist das Verfahren zur Herstellung chiraler tertiärer Phosphane, weil diese Verbindungen als Liganden bei homogen-katalytischen Verfahren die Palette schon bekannter und neu zu entwickelnder Reaktionen um die asymmetrische Variante erweitern und somit direkt zu optisch aktiven Produkten führen. Die Synthese der chiralen Phosphane erfolgt nach der hier vorgestellten Methode äußerst effizient auf einfache Weise und mit guten Ausbeuten.

Das Diarylphosphid der Formel (III) kann entweder direkt käuflich erworben werden, durch Metallierung eines Diarylphosphins, durch eine reduktive Spaltung eines Triarlyphosphins oder durch Reduktion eines Diarylphosphins der Formel (IV), 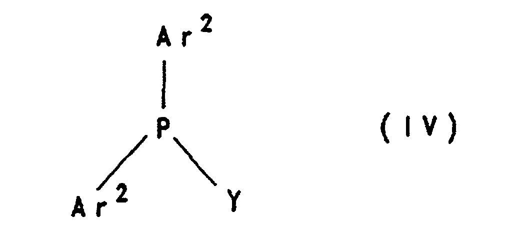 worin Ar² die vorstehend genannte Bedeutung besitzt und Y für Halogen, (C₁-C₄)Alkoxy, O-Phenyl steht, dargestellt werden. Die Reduktion kann hierbei in Gegenwart der Ammoniumverbindung der Formel (II) erfolgen, es ist jedoch auch möglich, zuerst die Reduktion durchzuführen und die Ammoniumverbindung anschließend zuzusetzen.

Die Reduktion der Diarylphosphine der Formel (IV) erfolgt vorzugsweise elektrochemisch, kann aber auch auf chemischem Weg, z.B. mit Metallen, insbesondere Alkalimetallen durchgeführt werden ("Methoden der organischen Chemie", Houben-Weyl, 4. Aufl., [1963], Bd. XII/1, S. 56).

Gegenüber der elektrochemischen Reduktion ist aber diese Vorgehensweise insofern nachteilig, als sicherheitstechnisch aufwendige Arbeitspraktiken der metallorganischen Synthese angewendet werden müßten. Beim elektrochemischen Verfahren hingegen erfolgt der Reduktionsschritt ausgehend von billigen, sicher handzuhabenden, technisch verfügbaren Ausgangsstoffen auf sehr einfache und technisch beherrschbare Art und Weise.

Man verwendet eine ungeteilte Elektrolysezelle, die von beliebiger Form sein, kann, beispielsweise eine trogförmige Zelle oder eine Durchflußzelle, die mindestens eine Kathode und eine Anode aufweist.
Die Kathode besteht aus einem der üblichen Metalle, beispielsweise Aluminium, Magnesium, Eisen, Nickel, Chrom, Titan, Kupfer, Zink, Cadmium, Silber, Gold oder Platin sowie Legierungen dieser Metalle, vorzugsweise Chromnickelstahl, oder aus Kohlenstoffmaterialien, beispielsweise Graphit oder glasartiger Kohlenstoff.
Als Anode werden Metalle eingesetzt, die unter den Elektrolysebedingungen schwer kathodisch abscheidbar sind, beispielsweise Aluminium, Calcium oder vorzugsweise Magnesium.

Als Elektrolyte kommen aprotische, dipolare Lösungsmittel in Betracht, beispielsweise Acetonitril, Dimethylacetamid, N-Methylpyrrolidon, Tetrahydrofuran oder vorzugsweise Dimethylformamid.
Falls die Zugabe der quartären Ammoniumverbindung erst nach der Elektrolyse erfolgt, kann zusätzlich noch ein indifferentes, im Elektrolyt lösliches Leitsalz zugesetzt werden, beispielsweise Alkali- oder Erdalkalihalogenide, beispielsweise Natriumbromid oder vorzugsweise Magnesiumchlorid.

Das erfindungsgemäße Verfahren wird bei Temperaturen zwischen etwa 0°C und 80°C, vorzugsweise zwischen 10°C and 60°C durchgeführt.
Die Elektrolyse erfolgt bei Stromdichten zwischen etwa 1 und 100 mA/cm², vorzugsweise zwischen 5 und 50 mA/cm².

Während der Elektrolyse wird zweckmäßig durch Rühren oder Strömen der Elektrolyt relativ zu den Elektroden bewegt. Erfolgt die Umsetzung in der Weise, daß die quartäre Ammoniumverbindung bereits während der elektrochemischen Reduktion zugegen ist, so kann man zur Vervollständigung des Umsatzes im Anschluß an die Elektroylse den Elektroylt noch für eine gewisse Zeit weiterrühren.

Die Isolierung der Verfahrensprodukte geschieht auf an sich bekannte Weise, beispielsweise durch Abdestillieren des Lösungsmittels, Lösen des Rückstandes in einem weiteren, mit Wasser nicht mischbaren Lösungsmittel aus der Gruppe der Kohlenwasserstoffe, Halogenkohlenwasserstoffe, Ether oder Ketone, Extraktion besagter Lösung mit verdünnter Mineralsäure, Verdampfen des Lösungsmittels und Isolierung des als Rückstand erhaltenen Rohproduktes durch fraktionierte Destillation oder Kristallisation.

Das nachfolgende Beispiel dient zur Erläuterung der Erfindung, ohne sie darauf zu beschränken.

Die Herstellung der Ammoniumverbindungen der Formel (II) kann nach allgemein bekannten Methoden, z.B. durch Umsetzung eines Alkylhalogenids mit einem Amin erfolgen ("Methoden der organischen Chemie", Houben-Weyl, 4. Aufl., [1963], Bd. XI/2, S. 593 ff).

### Beispiel:

Es wird eine ungeteilte Elektrolysezelle verwendet. Die Zelle besteht aus einem zylindrischen Glasgefäß (Durchmesser: 40 mm, Höhe 110 mm) mit Kühlmantel und einem eingeschliffenen Deckel aus Glas, in welchem sich 3 kleinere Schlifföffnungen befinden. Als Anode wird ein Magnesiumstab (Durchmesser: 10 mm, Länge: 100 mm; Eintauchtiefe: ca. 45 mm) eingesetzt, als Kathode dient ein rechteckiges Netz aus Chromnickel-Stahl (60 x 50 mm), welches zu einem Zylinder geformt und konzentrisch um die Anode angeordnet ist (der Abstand zwischen den Elektroden beträgt ca. 2 mm). Die Elektroden werden durch steife Drähte aus Chromnickel-Stahl, die als Stromzuführung dienen, im Deckel der Zelle gehalten. Die Zelle ist ferner mit einem Thermometer, einem Gaseinleitungsrohr für Stickstoff kombiniert mit einem Blasenzähler ausgestattet. Eine weitere Öffnung, die sich an der Zellwandung befindet, ist mit einem Septum aus Silikonkautschuk verschlossen. Der Elektroylt wird mit einem Magnetstab gerührt.

Die trockene Zelle wird mit 50 ml Dimethylformamid (max. 0,1 % Wasser) und 400 mg Magnesiumchlorid beschickt. Man leitet unter Rühren für 1/2 Stunde einen getrockneten Stickstoffstrom durch das Gemisch, fügt anschließend 6,49 g (0,029 mol) Chloridphenylphosphin durch das Septum zu und startet unmittelbar darauf die Elektroylse unter fortgesetztem Rühren und Durchleiten eines schwachen Stickstoffstroms. Die Stromstärke beträgt konstant 0,3 A, die Temperatur 25°C. Die Zellspannung liegt im Bereich von 0 bis 1,5 Volt. Die Ladungsmenge beträgt 0,92 Ah. Nach beendeter Elektrolyse gibt man 6,9 g (0,021 mol) R-(1-Phenyl)ethyl-triethylammoniumjodid hinzu und läßt das Reaktionsgemisch 4 Stunden bei 25°C rühren.

Die Aufarbeitung erfolgt unter N₂-Atmosphäre. Zunächst wird der Elektrolyt am Rotavapor bei 70°C/20 mbar eingeengt, der erhaltene Rückstand wird mit 100 ml 2 N Salzsäure und 70 ml Methylenchlorid aufgenommen und ausgerührt. die beiden Phasen werden getrennt, die organische Phase wird noch einmal mit 100 ml Wasser gewaschen und abdestilliert. Der Rückstand wird aus 15 ml Ethanol umkristallisiert, abfiltriert und mit 10 ml Ethanol nachgewaschen. Man erhält 5 g (83 % Ausbeute bezogen auf die eingesetzte Ammoniumverbindung) S-(1-Phenyl)ethyl-diphenylphosphin, das laut chiraler HPLC an einer Chiralcel OD-Säule (Eluent: n-Hexan/2-Propanol = 95/5) enantiomerenrein anfällt.
- Fp.:: 108,5°C
- [α]_{D} =: -265° (c = 1,7; CH₂Cl₂)
- ¹H-NMR: (300 MHz/CDCl₃): δ =: 1,33 (Quartett, 3 H, J = 7,5 Hz)
3,46 (Quintett, 1 H, J = 7,5 Hz)
6,96 - 7,14 (Multiplett, 10 H)
7,28 - 7,36 (Multiplett, 3 H) 7,51 - 7,60 (Multiplett, 2 H)
- ³¹P-NMR: (162 MHz/CDCl₃): δ =: 3,45

## Patentansprüche

1. Chirale tertiäre Diaryl-alkylphosphine der allgemeinen Formel (I), 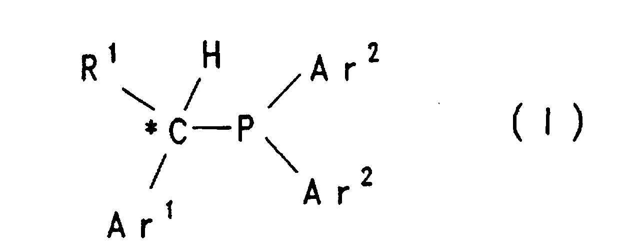 worin bedeuten:
R¹ (C₁-C₄)Alkyl, das auch mit F, CF₃, OCH₃ substituiert sein kann,
Ar¹, Ar² Phenyl, Naphthyl, Anthracenyl, die auch einen oder mehrere Substituenten aus der Reihe (C₁-C₄)Alkyl, (C₁-C₄)Alkoxy, CF₃, F tragen können,
* bezeichnet das chirale Kohlenstoffatom, das sowohl (R) als auch (S) konfiguriert sein kann.

2. Verbindungen nach Anspruch 1, worin Ar¹, Ar² für Phenyl oder Naphthyl stehen, die auch einen oder zwei Substituenten aus der Reihe CF₃, F, CH₃, OCH₃ tragen können und R¹ einen unsubstituierten (C₁-C₄)Alkylrest darstellt.

3. Verbindungen nach Anspruch 1, worin Ar¹ und Ar² unsubstituiertes Phenyl oder Naphthyl darstellen, und R¹ einer CH₃-Gruppe entspricht.

4. Verfahren zur Herstellung chiraler Diaryl-aralkylphosphine der Formel (I), **dadurch gekennzeichnet, daß** chirale quartäre Ammoniumsalze der Formel (II) 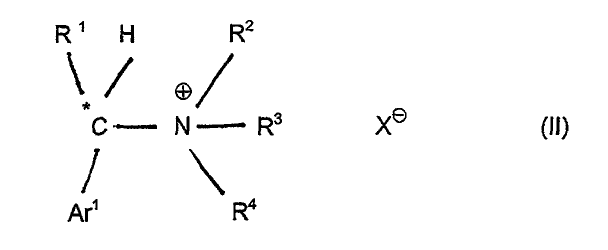 worin Ar¹ Phenyl, Naphthyl, Anthracenyl, die auch einen oder mehrere Substituenten aus der Reihe (C₁-C₄)Alkyl, (C₁-C₄)Alkoxy, CF₃, F tragen können, R¹ (C₁-C₄)Alkyl, das auch mit F, CF₃, OCH₃ substituiert sein kann, sowie R², R³ und R⁴ gleiche oder verschiedene, geradkettige oder verzweigte (C₁-C₂₀)Alkylreste darstellen und X⁻ ein Anion einer organischen oder anorganischen Säure bedeutet mit einem Salz eines Diarylphosphins der Formel (III), 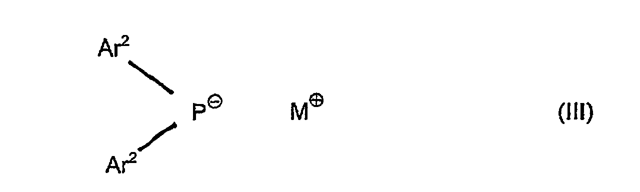 worin Ar² die Bedeutung Phenyl, Naphthyl, Anthracenyl, die auch einen oder mehrere Substituenten aus der Reihe (C₁-C₄)Alkyl, (C₁-C₄)Alkoxy, CF₃, F tragen können, besitzt und M⁺ ein Metallkation bedeutet, umgesetzt werden.

5. Verfahren nach Anspruch 4, **dadurch gekennzeichnet, daß** das Salz des Diarylphosphins der Formel (III) aus einem Diarylphosphin der Formel (IV), 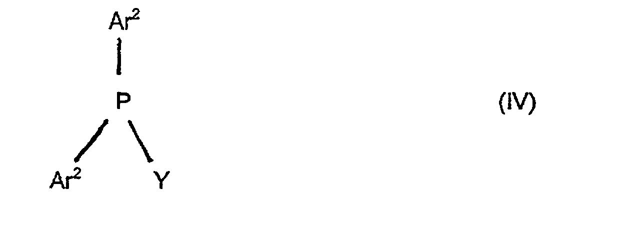 worin Ar² die vorstehend genannte Bedeutung besitzt und Y für Halogen, (C₁-C₄)Alkoxy, O-Phenyl steht, durch elektrochemische Reduktion hergestellt wird.

6. Verfahren nach Anspruch 5, **dadurch gekennzeichnet, daß** die elektrochemische Reduktion von (IV) in einer ungeteilten Elektrolysezelle, mit einer Kathode bestehend aus Aluminium, Magnesium, Eisen, Nickel, Chrom, Titan, Kupfer, Zink, Cadmium, Silber, Gold, Platin oder Legierungen dieser Metalle oder aus Kohlenstoffmaterialien und einer Anode bestehend aus Aluminium, Calcium oder Magnesium, durchgeführt wird.

7. Verfahren nach mindestens einem der Ansprüche 5 oder 6, **dadurch gekennzeichnet, daß** als Anode Chromnickelstahl und als Kathode Magnesium eingesetzt werden.

8. Verfahren nach mindestens einem der Ansprüche 5 bis 7, **dadurch gekennzeichnet, daß** als Elektrolyte aprotische, dipolare Lösungsmittel, insbesondere Acetonitril, Dimethylacetamid, N-Methylpyrrolidon, Dimethylformamid oder Tetrahydrofuran, bevorzugt Dimethylformamid eingesetzt werden.

9. Verfahren nach mindestens einem der Ansprüche 5 bis 8, **dadurch gekennzeichnet, daß** die Elektrolyse bei Stromdichten zwischen 1 und 100 mA/cm², insbesondere 5 und 50 mA/cm² durchgeführt wird.

10. Verfahren nach mindestens einem der Ansprüche 4 bis 9, **dadurch gekennzeichnet, daß** es bei einer Reaktionstemperatur zwischen 0 und 80°C, insbesondere 10 und 60°C durchgeführt wird.

## Claims

1. A chiral tertiary aikyldiarylphosphine of the formula (I), 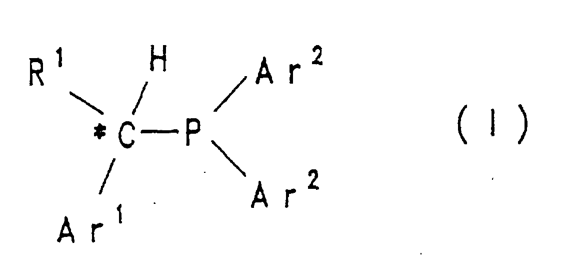 where
R¹, is (C₁-C₄)alkyl, which can also be substituted by F, CF₃, OCH₃,
Ar¹, Ar² are phenyl, naphthyl, anthracenyl, which can also bear one or more substituents selected from the group consisting of (C₁-C₄)alkyl, (C₁-C₄)alkoxy, CF₃, F,
* designates the chiral carbon atoms which can have either an (R) or an (S) configuration.

2. A compound as claimed in claim 1, wherein Ar¹, Ar² are phenyl or naphthyl which can also bear one or two substituents selected from the group consisting of CF₃, F, CH₃, OCH₃, and R¹ is an unsubstituted (C₁-C₄)alkyl radical.

3. A compound as claimed in claim 1, wherein Ar¹ and Ar² are unsubstituted phenyl or naphthyl and R¹ is a CH₃ group.

4. A process for preparing chiral aralkyldiarylphosphines of the formula (I), which comprises reacting chiral quaternary ammonium salts of the fomrula (II) 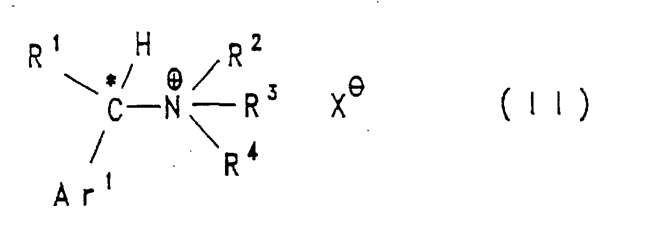 where Ar¹ is phenyl, naphthyl, anthracenyl, which can also bear one or more substituents selected from the group consisting of (C₁-C₄)alkyl, (C₁-C₄)alkoxy, CF₃, F, R¹ is (C₁-C₄)alkyl, which can also be substituted by F, CF₃, OCH₃ and R², R³ and R⁴ are identical or different, straight-chain or branched (C₁-C₂₀)alkyl radicals and X⁻ is an anion of an organic or inorganic acid, with a salt of a diarylphosphine of the formula (III), 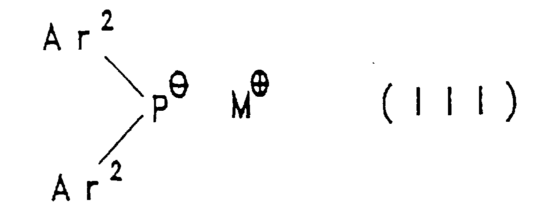 where Ar² is phenyl, naphthyl, anthracenyl, which can also bear one or more substituents selected from the group consisting of (C₁-C₄)alkyl, (C₁-C₄)alkoxy, CF₃, F and M⁺ is a metal cation.

5. The process as claimed in claim 4, wherein the salt of the diarylphosphine of the formula (III) is prepared from a diarylphosphine of the formula (IV), 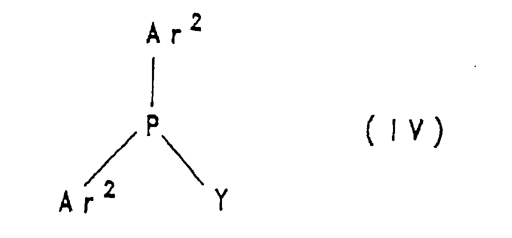 where Ar² is as defined above and Y is halogen, (C₁-C₄)alkoxy, O-phenyl, by electrochemical reduction.

6. The process as claimed in claim 5, wherein the electrochemical reduction of (IV) is carried out in an undivided electrolysis cell having a cathode comprising aluminum, magnesium, iron, nickel, chromium, titanium, copper, zinc, cadmium, silver, gold, platinum or alloys of these metals or carbon materials and an anion comprising aluminum, calcium or magnesium.

7. The process as claimed in at least one of claims 5 or 6, wherein the anode used is chromium-nickel steel and the cathode used is magnesium.

8. The process as claimed in at least one of claims 5 to 7, wherein the electrolytes used are aprotic, dipolar solvents, in particular acetonitrile, dimethylacetamide, N-methylpyrrolidone, dimethylformamide or tetrahydrofuran, preferably dimethylformamide.

9. The process as claimed in at least one of claims 5 to 8, wherein the electrolysis is carried out at current densities between 1 and 100 mA/cm², in partuclar between 5 and 50 mA/cm².

10. The process as claimed in at least one of claims 4 to 9, carried out at a reaction temperature between 0 and 80°C, in particular between 10 and 60°C.

## Revendications

1. Diarylalkylphosphines tertiaires chirales de la formule générale (I), 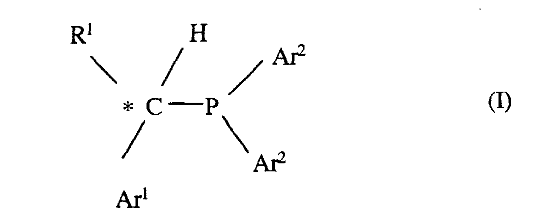 dans laquelle :
R¹ représente un groupe alkyle en C₁-C₄, lequel peut également être substitué par F, CF₃, OCH₃,
Ar¹, Ar² représentent un groupe phényle, naphtyle, anthracényle, lesquels peuvent également porter un ou plusieurs substituants de la série groupe alkyle en C₁-C₄, alcoxy en C₁-C₄, CF₃, F,
* représente l'atome de carbone chiral, lequel peut être configuré en (R) ainsi qu'en (S).

2. Composés selon la revendication 1, dans lesquels Ar¹, Ar² représentent un groupe phényle ou naphtyle, lesquels peuvent également porter un ou deux substituants de la série CF₃, F, CH₃, OCH₃ et R¹ représente un reste alkyle en C₁-C₄ non substitué.

3. Composés selon la revendication 1, dans lesquels Ar¹ et Ar² représentent un groupe phényle ou naphtyle non substitué et R¹ correspond à un groupe CH₃.

4. Procédé pour la préparation de diarylalkylphosphines chirales de la formule (I), **caractérisé en ce que** l'on fait réagir des sels d'ammonium quaternaire chiraux de la formule (II) 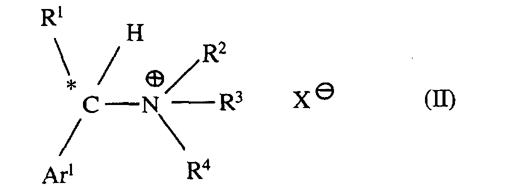 dans laquelle Ar¹ représente un groupe phényle, naphtyle, anthracényle, lesquels peuvent également porter un ou plusieurs substituants de la série groupe alkyle en C₁-C₄, alcoxy en C₁-C₄, CF₃, F, R¹ représente un groupe alkyle en C₁-C₄, lequel peut également être substitué par F, CF₃, OCH₃, ainsi que R², R³ et R⁴ représentent des restes alkyle en C₁-C₂₀ identiques ou différents, linéaires ou ramifiés et X⁻ représente un anion d'un acide organique ou inorganique avec un sel d'une diarylphosphine de la formule (III), 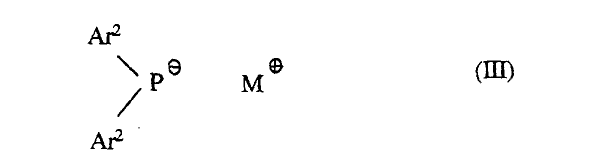 dans laquelle Ar² représente un groupe phényle, naphtyle, anthracényle, lesquels peuvent également porter un ou plusieurs substituants de la série groupe alkyle en C₁-C₄, alcoxy en C₁-C₄, CF₃, F, et M⁺ représente un cation métallique.

5. Procédé selon la revendication 4, **caractérisé en ce que** l'on prépare le sel de la diarylphosphine de la formule (III) à partir d'une diarylphosphine de la formule (IV), 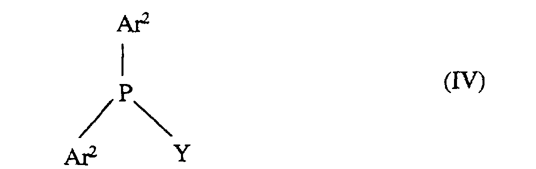 dans laquelle Ar² a la signification préalablement citée et Y représente un atome d'halogène, un groupe alcoxy en C₁-C₄, O-phényle, par réduction électrochimique.

6. Procédé selon la revendication 5, **caractérisé en ce que** la réduction électrochimique de (IV) est réalisée dans une cellule d'électrolyse non divisée avec une cathode constituée d'aluminium, de magnésium, de fer, de nickel, de chrome, de titane, de cuivre, de zinc, de cadmium, d'argent, d'or, de platine ou d'alliages de ces métaux ou à partir de matériaux carbonés et avec une anode constituée d'aluminium, de calcium ou de magnésium.

7. Procédé selon au moins l'une des revendications 5 ou 6, **caractérisé en ce que** l'on utilise comme anode un acier au chrome et au nickel et comme cathode du magnésium.

8. Procédé selon au moins l'une des revendications 5 à 7, **caractérisé en ce que** l'on utilise comme électrolytes des solvants aprotiques, dipolaires, en particulier l'acétonitrile, le diméthylacétamide, la N-méthylpyrrolidone, le diméthylformamide ou le tétrahydrofurane, de préférence le diméthylfbrmamide.

9. Procédé selon au moins l'une des revendications 5 à 8, **caractérisé en ce que** l'on réalise l'électrolyse à des densités de courant comprises entre 1 et 100 mA/cm², en particulier entre 5 et 50 mA/cm².

10. Procédé selon au moins l'une des revendications 4 à 9, **caractérisé en ce qu'**il est réalisé à une température de réaction comprise entre 0°C et 80°C, en particulier entre 10°C et 60°C.
